(19) **Europäisches Patentamt**

**European Patent Office**

**Office européen des brevets**

(11) Veröffentlichungsnummer: **0 405 212 A2**

(12) # EUROPÄISCHE PATENTANMELDUNG

(21) Anmeldenummer: **90111001.5**

(22) Anmeldetag: **11.06.90**

(51) Int. Cl.5: **G06K 19/06**

(30) Priorität: **28.06.89 DE 3921099**

(43) Veröffentlichungstag der Anmeldung:
**02.01.91 Patentblatt 91/01**

(84) Benannte Vertragsstaaten:
**AT BE CH DE ES FR GB LI LU NL SE**

(71) Anmelder: **Oehlmann, Harald**
**Kurt-Schumacher-Strasse 22**
**D-6392 Neu-Anspach(DE)**

(72) Erfinder: **Oehlmann, Harald**
**Kurt-Schumacher-Strasse 22**
**D-6392 Neu-Anspach(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**D-6200 Wiesbaden(DE)**

(54) **Maschinenlesbarer Datenträger.**

㉗ Es wird ein Datenträger beschrieben, bei dem ein Strichcode zeilenweise in der Datenfläche eines Datenträgers 1 angeordnet ist. Am Anfang und am Ende jeder Zeile ist ein Zusatzfeld vorgesehen, in dem ein Zeilenindikator zugeordnet ist. Der Zeilenindikator weist ebenfalls eine Strichbalkenkombination auf, die dem gewählten Strichcode entspricht. Die Zusatzfelder 6a, 6b der ersten Zeile 3a enthalten die Gesamtzahl der Zeilen, wobei die Gesamtzahl als Buchstabe verschlüsselt ist.

EP 0 405 212 A2

# F i g.1

# MASCHINENLESBARER DATENTRÄGER

Die Erfindung betrifft einen Datenträger, dessen Datenfläche mit parallelen Strichbalken unterschiedlicher Dicke und unterschiedlichen Abständen in Form eines Strichcodes versehen ist, der mit optischen Datenerfassungsgeräten lesbar ist, wobei die Datenfläche zumindest teilweise in Zeilen unterteilt ist, in dem die Strichbalken senkrecht zur Zeilenachse angeordnet sind. Die Erfindung betrifft auch ein Verfahren zum Lesen eines solchen Datenträgers.

Eine Möglichkeit, Informationen maschinenlesbar zu verschlüsseln, besteht darin, Striche unterschiedlicher Dicke in unterschiedlichen Abständen parallel zueinander nach einem vorgegebenen Schlüssel auf einem Datenträger anzuordnen. Eine breite Anwendung findet der Strichcode bei der europäischen Artikelnummer (EAN) zur eindeutigen Kennzeichnung von Handelswaren.

Bei diesem Strichcode, der beispielsweise auf Etiketten aufgedruckt ist, ist die Datenfläche mit derartigen Strichen versehen, deren Länge gleich einer Kantenlänge der rechteckigen Datenfläche ist. Da die Information in der Breite der Striche und in der Breite der Abstände der Striche zueinander enthalten ist, wird nur eine Dimension der Datenfläche zur Datenspeicherung ausgenutzt.

Diese Datenträger haben den Nachteil, daß die Informationsdichte äußerst gering ist. Bei Waren, die entsprechend große Flächen zur Anbringung dieses Datenträgers aufweisen, stellt der Platzbedarf kein Problem dar.

Kein Platz ist allerdings bei hochwertigen Komponenten der Mikroelektronik vorhanden, wie z.B. auf integrierten Schaltkreisen, welche gern mit individuellen Kennungen versehen werden. Dies ist z.B. bei den sogenannten EPROMs der Fall. Auch die Leiterplatte selbst, welche im Zuge der Seriennummernvergabe vorbereitend für Qualitätskontrolle, Lagerhaltung und Garantieverfolgung mit Strichcodes versehen werden, verfügt über immer weniger Platz bei steigendem Informationsbedarf.

Die Schmuckindustrie und der Schmuckhandel versuchen durch schwierig lesbare Ultra-High-Density-Codierung die Information in einer Achse unterzubringen. Auch hier besteht ein Bedürfnis, auf einer relativ kleinen Fläche eine Vielzahl von Daten unterzubringen. Die Medizintechnik steht im Augenblick vor dem Problem, daß zunehmend eine automatisch lesbare Beschriftung von Medikamenten verlangt wird, wofür die bisher verwendeten Datenträger mit Strichcode wegen ihres großen Platzbedarfes ungeeignet sind, da Medikamente selbst stets in kleinen Packungen untergebracht sind.

Von der Industrie wird auch zunehmend gewünscht, Werkzeuge oder Kleinteile für die verschiedensten Einsatzgebiete mit einem entsprechenden Code zu versehen, wobei eine automatische Identifikation mit großem Informationsbedarf auf kleinstem Raum möglich sein soll.

Von der Automobilindustrie werden bereits Warenanhänger verwendet, welche mit bis zu 40 Zeichen auf ca. sechs Zeilen die gesamte Information unterbringen. Hierbei wird allerdings nicht auf eine konsequente Platzeinsparung geachtet. Zur Lösung dieser Probleme wurde der Code 49 entwickelt, der ein Strichcode ist, der zeilenweise auf der Datenfläche angeordnet ist. Die Zeilen sind untereinander angeordnet und füllen die rechteckige Datenfläche vollständig aus. Dieser zeilenweise angeordente Strichcode macht es erforderlich, daß die Zeilen in der richtigen Reihenfolge mit dem Datenerfassungsgerät gelesen werden. Bei Handgeräten muß die Bedienungsperson das Gerät zeilenweise über den Datenträger führen.

Wenn jedoch ein automatische Lesegerät verwendet wird, bei dem der Laserstrahl längs eines vorgegebenen Weges kreuz und quer über den Datenträger geführt wird, so daß der Datenträger in jeder beliebigen Position gelesen werden kann, werden die Zeilen nicht in ihrer richtigen Reihenfolge abgetastet, wobei eine oder mehrere Zeilen auch diagonal gelesen werden. Dies führt bei der Decodierung zu einem Datengemisch, das mit dem tatsächlichen Informationsgehalt des Datenträgers nichts mehr zu tun hat.

Um hier eine gewisse Abhilfe zu schaffen, werden gemäß Code 49 die Symbole zu Worten zusammengefaßt und entsprechend eines vorgegebenen Schlüssels mit einer Parität versehen, so daß anhand des Paritätsmusters bei der Decodierung eine Zeilenzuordnung möglich ist. Darüberhinaus ist noch mindestens ein Kontrollsymbol erforderlich, daß u.a. die Zeilenanzahl enhält.

Diese Anordnung des Strichcodes ist bezüglich der Auswertung äußerst aufwendig und bietet nicht die Lesesicherheit, die heutzutage gefordert wird. Beim Diagonallesen kann eine Paritätskombination erfaßt werden, die eine bestimmte Zeilennummer vortäuscht. Die gelesene Information stimmt dann aber nicht mit dem Informationsgehalt der entsprechenden Zeile überein, so daß bei Verwendung herkömmlicher Lesegeräte Fehler auftreten können.

Es ist daher Aufgabe der Erfindung, einen Datenträger zu schaffen, bei dem der Strichcode zeilenweise angeordnet ist und der mit herkömmlichen Datenerfassungsgeräten lesbar ist, wobei die Lesesicherheit gegenüber bekannten Datenträgern deutlich verbessert ist.

Diese Aufgabe wird mit einem Datenträger gemäß den kennzeichnenden Merkmalen von Anspruch 1

EP 0 405 212 A2

und einem Verfahren gemäß Anspruch 10 gelöst.

Es hat sich gezeigt, daß die Lesesicherheit deutlich erhöht werden kann, wenn jede Zeile mit einem Zeilenindikator versehen ist. Zu diesem Zweck ist zumindest an einem Ende jeder Zeile eine Zusatzfläche vorgesehen, in der der Zeilenindikator als eine dem gewählten Strichcode entsprechende Strichbalkenkombination angeordnet ist.

Vorzugsweise ist in der Zusatzfläche der ersten Zeile die Gesamtanzahl der Zeilen als dem gewählten Strichcode entsprechende Strichbalkenkombination angeordnet.

Gemäß einer besonderen Ausführungsform sind die Zusatzflächen an beiden Zeilenenden vorgesehen.

Damit die in der Zusatzfläche der ersten Zeile codiert enthaltene Gesamtanzahl der Zeichen nicht mit dem Zeilenindikator der letzten Zeile verwechselt werden kann, ist die Zusatzfläche der ersten Zeile mit einer Strichbalkenkombination belegt, die vom Datenerfassungsgerät als Buchstabenzeichen lesbar ist. Da insgesamt bis zu 22 Zeilen untereinander angeordnet werden können, kann der Zeilenindikator F1 Werte von 1 bis 22 annehmen. Welche Zuordnungen der Zeilenindikatoren F1 bis Fm möglich sind, sind aus den nachfolgenden beiden Tabellen zu entnehmen.

| Indikator Zeile 1, F1: Folgende Tabelle zeigt die Verknüpfung von Zeilenanzahl "m" zum Zeichencode in der ersten Zeile F1. | | | |
|---|---|---|---|
| Zeichen als F1 | Zeilenzahl m | Zeichen als F1 | Zeilenzahl m |
| L | 1 | W | 12 |
| M | 2 | X | 13 |
| N | 3 | Y | 14 |
| O | 4 | Z | 15 |
| P | 5 | - | 16 |
| Q | 6 | . | 17 |
| R | 7 |  | 18 |
| S | 8 | $ | 19 |
| T | 9 | / | 20 |
| U | 10 | + | 21 |
| V | 11 | % | 22 |

| Indikatoren der Zeilen F2 bis Fm: Zeilenzuordnungstabelle für einstellige Codierung pro Zeile von F2 bis Fm (max bis F22). | | | |
|---|---|---|---|
| Zeichen von F2-Fm | ist Zeile Nummer | Zeichen F2 - Fm | ist Zeile Nummer |
| 0 | 2 | B | 13 |
| 1 | 3 | C | 14 |
| 2 | 4 | D | 15 |
| 3 | 5 | E | 16 |
| 4 | 6 | F | 17 |
| 5 | 7 | G | 18 |
| 6 | 8 | H | 19 |
| 7 | 9 | I | 20 |
| 8 | 10 | J | 21 |
| 9 | 11 | K | 22 |
| A | 12 | | |

Durch die Anordnung der Zeilenindikatoren sowohl am Zeilenanfang als auch am Zeilenende wird ein

4

fehlerhaftes Diagonallesen wirksam verhindert, da in diesem Fall der Zeilenindikator zu Beginn des Lesevorganges nicht mit dem Zeilenindikator am Ende des Lesevorgangs übereinstimmt. Vom Lesegerät wird daraufhin die Information verworfen. Die Zeilenindikatoren übernehmen in diesem Fall auch die Funktion eines Start- und Stopsymbols.

Zusätzlich kann jedoch auch an den beiden Zeilenenden an den Zusatzflächen angrenzend je eine weitere Datenfeldfläche vorgesehen sein, die mit einem Start-bzw. Stopsymbol als dem gewählten Strichcode entsprechende Strichbalkenkombination belegt sein. In diesem Fall würde es zur Erzielung einer optimalen Lesesicherheit ausreichen, pro Zeile nur einen Zeilenindikator vorzusehen.

Vorzugsweise sind diese Datenfeldfläche so angeordnet, daß sich die Strichbalken, die das Start- bzw. Stopsymbol darstellen, zumindest über die Gesamtbreite aller Zeilen erstrecken.

Durch die Verwendung von Zusatzflächen mit Zeilenindikatoren können die einzelnen Zeilen in beliebiger Anordnung auf der Datenfläche des Datenträgers angeordnet sein. Eine Anordnung der Zeilen untereinander ist nicht zwingend erforderlich.

Der Datenträger kann beispielsweise ein Etikett sein, auf dem die Strichbalken auf einem hellen Untergrund in schwarzer Farbe aufgedruckt sind. Es ist aber auch möglich, den Datenträger aus verformbarem Material herzustellen, wobei dann die Strichbalken oder die Zwischenräume in Form von Rillen eingeprägt oder eingraviert sind. Es kann aber auch die Ware selbst als Datenträger verwendet werden, was sich beispielsweise bei Medikamenten in Tablettenform anbietet, da der Platzbedarf durch die zeilenweise Anordnung des Strichcodes gering ist.

Die Anordnung von Zusatzfeldern mit Zeilenindikatoren kann mit weiteren Sicherheitschecks verbunden werden. So kann beispielsweise eine Prüfziffernrechnung im Modulo-43-Verfahren mit einer besonderen Wichtung vorgesehen sein, um Überschneidungen durch einen zwangsläufigen Versatz pro Zeilenfeld zum nächsten zu verhindern. Auch können zwei Standard-ModulO-43-Checksummen unabhängig versetzt vorgesehen sein.

Die erfindungsgemäßen Datenträger erfordern keine neuen Lesegeräte, sondern können mit den herkömmlichen Datenerfassungsgeräten gelesen werden. Hierbei wird der Lichtstrahl in beliebiger Reihenfolge solange über die Datenfläche geführt, bis alle Zeilen abgetastet sind. Anschließend werden die Zeilen anhand der Zeilenindikatoren geordnet. Die in der Zusatzfläche der ersten Zeile enthaltene Gesamtanzahl der Zeilen dient dazu, dem Lesegerät die hierfür erforderliche Information zur Verfügung zu stellen. Da bei den herkömmlichen Datenerfassungsgeräten der Datenträger bezüglich des Lesegerätes nicht in einer vorgegebenen Richtung pcsitioniert werden muß, werden einige oder mehrere Zeilen auch diagonal gelesen. Dies führt jedoch nicht zu fehlerhaften Daten bei der Decodierung, da von der Auswerteeinheit anhand der unterschiedlichen Zeilenindikatoren am Anfang und Ende der jeweils gelesenen Daten erkannt wird, daß diese Information zu verwerfen ist. Der Laserstrahl wird in diesem Fall weiter über die Datenfläche geführt, wobei ggf. das Lesegerät anzeigen kann, daß der Datenträger etwas gedreht oder verschoben werden muß, so daß alle Zeilen abtastbar sind.

Beispielhafte Ausführungsformen der Erfindung werden nachfolgend anhand der Zeichnungen näher erläutert.

Es zeigen:

Fig. 1 die schematische Darstellung eines Datenträgers in Draufsicht;

Fig. 2 eine Draufsicht auf einen Datenträger in einer weiteren Ausführungsform;

Fig. 3 die Draufsicht auf einen Datenträger in einer weiteren Ausführungsform und

Fig. 4 den Datenträger mit eingezeichneten Strichbalken gemäß der in Figur 3 gezeigten Ausführungsform.

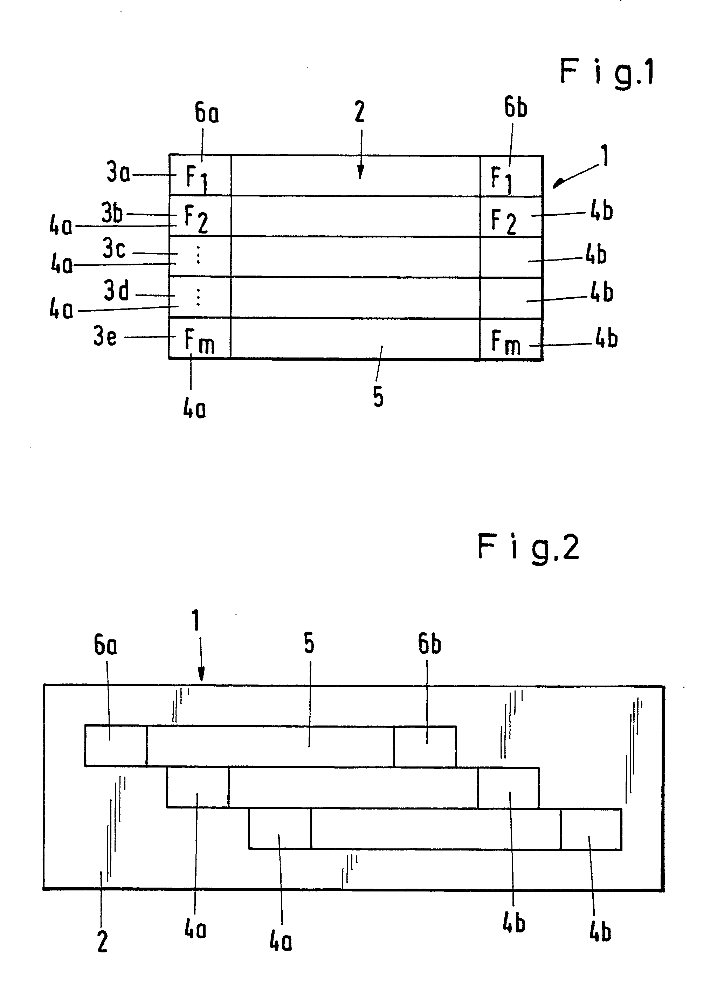

In der Figur 1 ist der Datenträger 1 in Draufsicht schematisch dargestellt. Die Strichbalken sind in dieser Darstellung weggelassen. Die gesamte Datenfläche 2 ist in fünf Zellen 3a bis 3e unterteilt. Jede Zeile enthält in der Fläche 5 Informationen und besitzt am Anfang und Ende je eine Zusatzfläche 4a, 4b, 6a und 6b, in denen die Zeilenindikatoren F1 bis Fm angeordnet sind. Jeder Teilenindikator F wiederholt sich identisch am Zeilenende.

Die Zusatzflächen 6a und 6b der ersten Zeile 3a enthalten die Gesamtanzahl der Zeilen, wobei die gewählte Strichbalkenkombination einen bestimmten Buchstaben gemäß der Tabelle 1 darstellt. In dem hier gezeigten Beispiel mit 5 Zeilen enthält der Zeilenindikator F1 eine Strichkombination, die dem Buchstaben P entspricht. Damit wird die Gesamtanzahl, die in F1 codiert enthalten ist, von dem Zeilenindikator Fm in der fünften Zeile 3e , der die Zahl 5 enthält, unterschieden. Das Lese- und Auswertegerät kann damit die Gesamtanzahl von der Nummer der letzten Zeile unterscheiden. In der hier gezeigten Ausführungsform der Figur 1 übernehmen die Zeilenindikatoren F1 bis Fm auch die Funktion eines Stop- und Startsymbols.

In der Figur 2 ist eine weitere Ausführungsform des Datenträgers 1 dargestellt. Die Datenfläche 2 weist treppenförmig angeordnete Zeilen 3a bis 3c auf. Es ist aber auch jede andere beliebige Anordnung von Zeilen innerhalb der Datenfläche des Datenträgers 1 möglich.

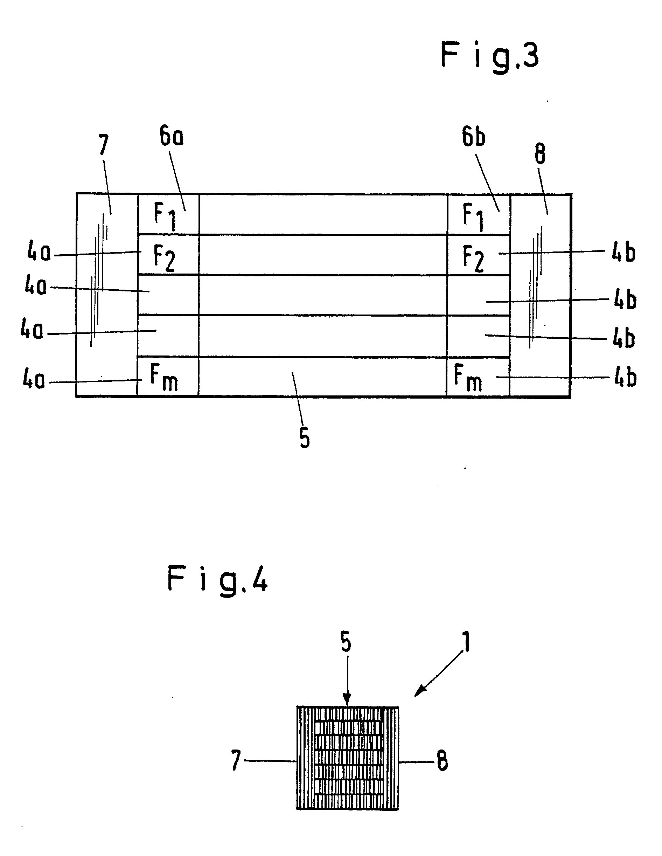

In der Figur 3 sind zu Beginn jeder Zeile und am Ende jeder Zeile weitere Datenfeldflächen 7 und 8 vorgesehen, die das Start- bzw. Stopsymbol als Strichbalkenkombination enthalten. Ein Beispiel ist in der Figur 4 zu sehen, wo die Strichbalken, die das Start- bzw. Stopsymbol in den Datenfeldflächen 7 und repräsentieren, sich über die gesamte Breite aller Zeilen erstrecken. Die Zusatzfelder für die Zeilenindikatoren sind auch in der Ausführungsform der Figur 4 enthalten, können jedoch nur anhand der jeweiligen Strichkombination identifiziert werden.

Bezugszeichenliste

1 Datenträger
2 Datenfeld
3a bis 3e Zeilen
4a, 4b Zusatzfelder für Zeilenindidatoren
5 Fläche für Informationen
6a, 6b Zusatzfeld der ersten Zeile für Gesamtanzahl der Zeilen
7 Datenfeldfläche für Startsymbol
8 Datenfeldfläche für Stopymbol

**Ansprüche**

1) Datenträger, dessen Datenfläche mit parallelen Strichbalken unterschiedlicher Dicke und unterschiedlichen Abständen in Form eines Strichcodes versehen ist, der mit optischen Datenerfassungsgeräten lesbar ist, wobei die Datenfläche zumindest teilweise in Zeilen unterteilt ist, in denen die Strichbalken senkrecht zur Zeilenachse angeordnet sind, dadurch gekennzeichnet,
daß zumindest an einem Ende jeder Zeile (3) eine Zusatzfläche (4, 6) vorgesehen ist, in der ein Zeilenindikator (F) als dem gewählten Strichcode entsprechende Strichbalkenkombination angeordnet ist.

2) Datenträger nach Anspruch 1, dadurch gekennzeichnet, daß in der Zusatzfläche (6a) der erster Zeile (3a) die Gesamtanzahl der Zeichen als dem gewählten Strichcode entsprechende Strichbalkenkombination angeordnet ist.

3) Datenträger nach Anspruch 1 oder 7, dadurch gekennzeichnet, daß diese Zusatzflächen (4, 6) an beiden Zeilenenden vorgesehen sind.

4) Datenträger nach einem der Ansprüche 1 bis 3, dadurch gekennzeichnet, daß die Zusatzfläche (6a, 6b) der ersten Zeile (3a) mit einer Strichbalkenkombinantion belegt ist, die vom Datenerfassungsgerät als Duchstabenzeichen lesbar ist.

5) Datenträger nach einem der Ansprüche 1 bis 4, dadurch gekennzeichnet, daß zusätzlich an beiden Zeilenenden an die Zusatzflächen (4, 6) angrenzend je eine weitere Datenfeldfläche (7, 8) vorgesehen ist, die mit einem Start- bzw. Stopsymbol als dem gewählten Strichcode entsprechende Strichbalkenkombination belegt ist.

6) Datenträger nach Anspruch 5, dadurch gekennzeichnet, daß die in den Datenfeldern (7, 8) angeordneten Strichbalken sich zumindest über die Gesamtbreite aller Zeilen (3) erstrecken.

7) Datenträger nach einem der Ansprüche 1 bis 6, dadurch gekennzeichnet, daß die Zeilen (3) mit den Zusatzflächen (4, 6) und den Datenfeldflächen (7, 8) in beliebiger Anordnung in der Datenfläche (2) angeordnet sind.

8) Datenträger aus bedruckbarem Material, nach einem der Ansprüche 1 bis 7, dadurch gekennzeichnet, daß die Strichbalken auf einem hellen Untergrund in schwarzer Farbe aufgedruckt sind.

9) Datenträger aus verformbarem Material, nach einem der Ansprüche 1 bis 7, dadurch gekennzeichnet, daß die Strichbalken oder die Zwischenräume in Form von Rillen eingeprägt oder eingraviert sind.

10) Verfahren zum Lesen des Datenträgers nach Anspruch 1, bei dem ein Lichtstrahl längs eines vorgegebenen Weges über den Datenträger geführt wird und der Strichcode jederzeit abgetastet wird und in einer Auswerteeinheit in alphanumerische Zeichen decodiert wird, dadurch gekennzeichnet, daß der Lichstrahl in beliebiger Reihenfolge solange über die Zeilen der Datenfläche geführt wird, bis alle Zeilen abgetastet sind und
daß anschließend die Zeilen mittels der Zeilenindikatoren geordnet werden.

11) Verfahren nach Anspruch 10, dadurch gekennzeichnet, daß die in der Zusatzfläche der ersten Zeile enthaltene Gesamtanzahl der Zeilen dazu verwendet wird, den Lichtstrahl solange über die Datenfläche zu führen, bis alle Zeilen gelesen sind.

Fig.1

Fig.2

Fig.3

Fig.4